Europäisches Patentamt

European Patent Office

Office européen des brevets

(19)

(11) Numéro de publication: **0 296 954**
**A1**

## DEMANDE DE BREVET EUROPEEN

(12)

(21) Numéro de dépôt: 88401535.5

(51) Int. Cl.4: **G 21 C 7/10**

(22) Date de dépôt: **20.06.88**

(30) Priorité: **25.06.87 FR 8708984**

(43) Date de publication de la demande:
**28.12.88 Bulletin 88/52**

(84) Etats contractants désignés: **BE DE ES GB SE**

(71) Demandeur: **FRAMATOME**
**Tour Fiat 1 place de la Coupole**
**F-92400 Courbevoie (FR)**

**COMPAGNIE GENERALE DES MATIERES NUCLEAIRES
(COGEMA)**
**2, rue Paul Dautier B.P. 4**
**F-78141 Velizy-Villacoublay (FR)**

(72) Inventeur: **Chotard, Alain**
**4 Impasse de la Meunerie**
**F-69250 Neuville sur Saone (FR)**

(74) Mandataire: **Bouget, Lucien et al**
**Cabinet Lavoix 2, Place d'Estienne d'Orves**
**F-75441 Paris Cédex 09 (FR)**

(54) **Elément absorbant les neutrons réalisé sous forme modulaire et capsule modulaire pour un tel élément.**

(57) L'élément absorbant (1) comporte une gaine tubulaire (2) fermée à ses extrémités (3, 4) renfermant un matériau absorbant les neutrons. L'élément (1) comporte une pluralité de capsules modulaires (5) disposées l'une à la suite de l'autre, dans la direction axiale, à l'intérieur de la gaine (2). Chacune des capsules modulaires est constituée par une enveloppe tubulaire (10) fermée à ses deux extrémités par un élément poreux, entièrement remplie de matériau absorbant (13).

FIG.1

## Description

### Elément absorbant les neutrons réalisé sous forme modulaire et capsule modulaire pour un tel élément

L'invention concerne un élément absorbant les neutrons utilisé dans un réacteur nucléaire, pour le réglage de l'activité du coeur du réacteur.

Il est connu d'utiliser dans un réacteur nucléaire, des éléments absorbants les neutrons comportant une gaine tubulaire fermée à ses extrémités, en un matériau résistant au fluage et à la corrosion sous l'action du réfrigérant à pression et température élevées du réacteur nucléaire, renfermant un matériau absorbant les neutrons tel que du carbure de bore $B_4C$ contenant une certaine proportion de bore 10. De tels éléments absorbants ou crayons absorbants peuvent être introduits dans certains assemblages du coeur du réacteur, en remplacement de crayons combustibles. Les crayons absorbants peuvent également constituer des grappes de commande dont les crayons disposés parallèlement les uns par rapport aux autres peuvent être déplacés simultanément à l'intérieur des tubes guides de certains assemblages du coeur, pour assurer la conduite du réacteur.

Le matériau absorbant se présente généralement sous la forme de pastilles frittées de forme cylindrique qui sont empilées à l'intérieur de la gaine tubulaire du crayon absorbant. Les pastilles ont un diamètre peu inférieur au diamètre intérieur de la gaine, si bien que le jeu radial entre la surface intérieure de la gaine et l'empilement de pastilles absorbantes est généralement très faible. On assure ainsi le meilleur remplissage possible de la gaine, par le matériau absorbant.

Le bore 10 contenu dans le carbure de bore absorbant est l'isotope du bore qui assure l'absorption des neutrons. Le bore 10 contenu dans les pastilles d'un crayon absorbant est consommé en service dans le réacteur, sous l'effet du flux de neutrons. La dégradation des pastilles d'absorbant par consommation de bore 10 commence par les couches superficielles des pastilles et se traduit par un gonflement et une desquamation de leur zone corticale. Il peut en résulter la formation de petits fragments de $B_4C$ qui sont susceptibles de venir se loger dans le jeu existant entre la pastille et la gaine et de provoquer ainsi une déformation excessive de la gaine qui peut aller jusqu'à sa rupture, sous l'effet de la poussée de la pastille due au gonflement.

Ce phénomène est connu sous le nom d'interaction pastilles-gaine.

D'autre part, lorsque le bore 10 absorbe un neutron, il donne naissance à du tritium par la réaction suivante :

$$B10 + n \rightarrow H^3 + 2\alpha.$$

Le tritium formé peut diffuser au travers de la gaine du crayon absorbant qui est généralement en acier inoxydable ; le tritium s'échappe ainsi dans le fluide primaire du réacteur, si bien qu'il est susceptible de polluer le circuit primaire du réacteur.

Dans le cas d'une rupture de la gaine du crayon absorbant, le liquide de refroidissement primaire du réacteur, par exemple de l'eau sous pression, vient en contact avec le carbure de bore contenu dans la gaine. Il se produit alors les réactions suivantes :

$$B_4C + 6H_2O \rightarrow 6H_2 + 2B_2O_3 + C$$
$$B_2O_3 + 3H_2O \rightarrow 6H_3BO_3$$

D'autre part, l'eau contenant de l'acide borique $H_3BO_3$ est décomposée en $H_2$ et $H_2O_2$, sous l'action des particules. Le taux de production de $H_2$ et $H_2O_2$ croît avec le flux neutronique et la concentration en acide borique.

Le peroxyde d'hydrogène $H_2O_2$ résultant de la radiolyse de l'eau réagit avec le carbure de bore $B_4C$ selon la réaction :

$$B_4C + 3H_2O_2 \rightarrow 3H_2 + 2B_2O_3 + C$$

A l'issue de cette réaction, l'oxyde $B_2O_3$ donne de l'acide borique $H_3BO_3$ en se dissolvant dans l'eau.

En cas de rupture de gaine, par usure de cette gaine ou par interaction pastilles-gaine, l'eau du circuit primaire pénètre dans le crayon dans le faible jeu existant entre les pastilles et la gaine ainsi que dans les porosités des pastilles frittées. Les réactions 1 et 2 indiquées ci-dessus se produisent et la concentration locale en acide borique $H_3BO_3$ augmente, ce qui accroît la radiolyse de l'eau qui donne naissance à du peroyxde d'hydrogène $H_2O_2$.

Ce peroxyde d'hydrogène conduit à son tour à la dégradation du $B_4C$ par la réaction 3.

Cet enchaînement de réactions conduit à une corrosion et à une dégradation accélérée du $B_4C$ qui peut aller jusqu'à la dissolution complète du $B_4C$ contenu dans le crayon absorbant et à une perte totale d'antiréactivité de ce crayon, dans un délai relativement bref pouvant être de quelques mois.

Dans le cas de crayons constituant des éléments d'une grappe de commande utilisée comme barre de contrôle du réacteur, la fonction de cette barre de contrôle peut être perdue partiellement ou totalement.

Le but de l'invention est donc de proposer un élément absorbant les neutrons comportant une gaine tubulaire fermée à ses extrémités, en un matériau résistant au fluage et à la corrosion sous l'action d'un réfrigérant à pression et température élevées d'un réacteur nucléaire, renfermant un matériau absorbant les neutrons, qui permette d'éviter une interaction en service entre le matériau absorbant et la gaine ou de limiter les conséquences d'une telle interaction ainsi que d'empêcher une mise en contact du fluide de refroidissement du réacteur et du matériau absorbant ou d'en limiter les conséquences.

Dans ce but, l'élément absorbant selon l'invention comporte une pluralité de capsules modulaires disposées les unes à la suite des autres dans la direction axiale, à l'intérieur de la gaine, chacune des capsules modulaires étant constituée par une enveloppe tubulaire fermée à ses deux extrémités par un élément poreux, entièrement rempli de matériau absorbant.

Afin de bien faire comprendre l'invention, on va maintenant décrire, à titre d'exemple non limitatif, en se référant aux figures jointes en annexe, un mode de réalisation d'un crayon absorbant suivant l'invention.

La figure 1 est une vue en coupe axiale d'un crayon absorbant suivant l'invention.

La figure 2 est une vue en coupe axiale à plus grande échelle d'une capsule modulaire de l'élément combustible représenté sur la figure 1.

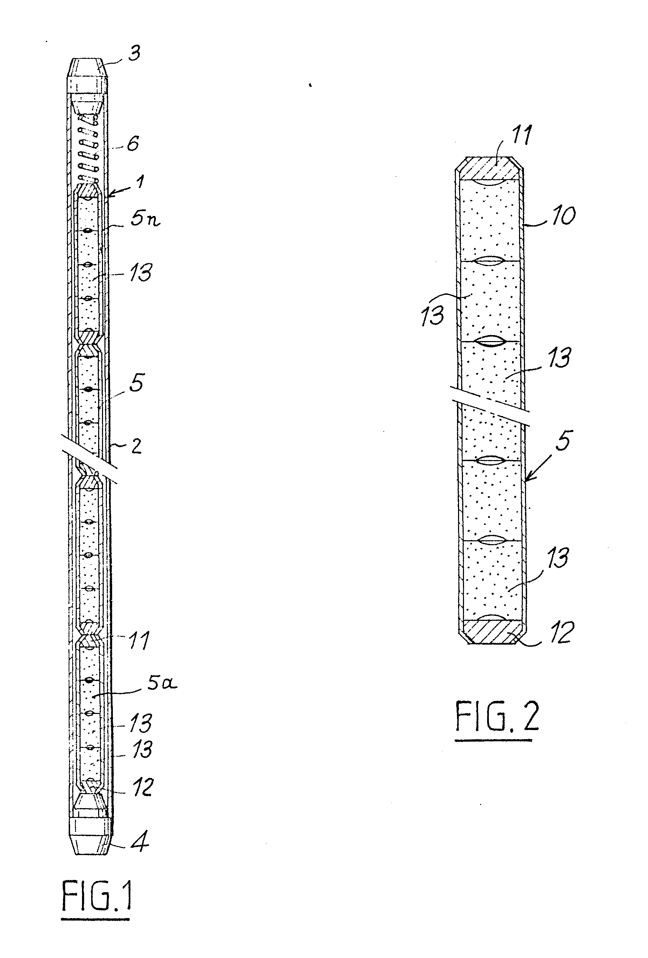

Sur la figure 1, on voit un élément absorbant désigné dans son ensemble par le repère 1 et comportant une gaine tubulaire 2 fermée à ses extrémités par des bouchons 3 et 4.

Dans le cas d'un crayon absorbant utilisé dans les réacteurs nucléaire à eau sous pression, la gaine 2 est constituée par un tube en acier inoxydable ou en alliage de zirconium (Zircaloy) et les bouchons 3 et 4, également en acier inoxydable ou en Zircaloy sont soudés aux extrémités de la gaine 2.

La gaine 2 peut être constituée par exemple par une gaine d'un élément absorbant selon l'art anté rieur destiné à contenir des pastilles de carbure de bore en contact direct avec le paroi intérieure de la gaine. De tels éléments absorbants dont la gaine est dimensionnée de façon adaptée peuvent être intro duits dans des assemblages combustibles du coeur du réacteur ou assemblés comme éléments consti tutifs d'une barre de contrôle du réacteur.

Selon l'invention, le crayon absorbant 1 renferme des capsules modulaires 5 qui sont empilées dans la gaine 2, suivant la direction axiale de cette gaine entre les bouchons 3 et 4.

La fabrication de l'élément absorbant 1 peut être assurée par les opérations suivantes :
- soudure d'un bouchon 4 à l'extrémité d'une gaine tubulaire 2, la gaine et le bouchon étant par exemple en acier inoxydable,
- introduction d'une première capsule 5a dans la gaine 2, cette capsule venant reposer sur le bouchon 4,
- empilement des capsules suivantes 5, jusqu'à la dernière capsule 5n,
- soudage du bouchon 3 en acier inoxydable à la seconde extrémité de la gaine tubulaire 2, un ressort 6 de maintien des capsules étant intercalé entre le bouchon 3 et la dernière capsule 5n et une atmosphère d'hélium sous pression étant maintenue à l'intérieur de la gaine 2 pendant le soudage du bouchon 3.

On va maintenant se reporter à la figure 2 pour décrire une capsule 5 contenant du matériau absorbant.

La capsule 5 comporte une enveloppe tubulaire 10 fermée à ses extrémités par deux pastilles poreuses 11 et 12. L'enveloppe 10 renferme un empilement de pastilles 13 en carbure de bore $B_4C$.

Les pastilles 13 sont insérées dans l'enveloppe tubulaire 10, de façon qu'il n'existe aucun jeu radial entre les pastilles et cette enveloppe. Les pastilles 13 disposées à l'extrémité de la capsule sont en contact avec les pastilles poreuses 11. Le volume intérieur de l'enveloppe tubulaire 10 est donc entièrement rempli par du matériau absorbant.

Le gaine 10 présente une épaisseur faible com prise entre 0,15 et 0,20 mm.

Pour réaliser la capsule représentée sur la figure 2, on part d'une enveloppe tubulaire d'une épaisseur comprise entre 0,15 et 0,20 mm dont le diamètre intérieur permet l'introduction des pastilles 13 en carbure de bore $B_4C$. Dans un premier temps, cette enveloppe tubulaire est fermée à l'une de ses extrémités par un bouchon et une pastille poreuse, par exemple, la pastille 12 est introduite dans l'enveloppe tubulaire jusqu'à sa mise en contact avec ce premier bouchon constituant un fond de fermeture de l'enveloppe 10. Les pastilles en carbure de bore 13 sont empilées à la suite de la pastille poreuse 12, puis une seconde pastille poreuse 11 est mise en place contre la dernière pastille 13 introduire dans l'enveloppe 10. Un bouchon de fermeture est ensuite fixé de façon étanche à la seconde extrémité de l'enveloppe 10.

L'enveloppe 10 fermée de façon étanche par les deux bouchons et renfermant les pastilles poreuses 11 et 12 et les pastilles absorbantes 13 est introduite dans une enceinte où elle est soumise à une température et à une pression élevées.

A l'issue du traitement à température et pression élevées, ce traitement connu étant appelé marmit tage, la gaine tubulaire 10 est venue en contact avec la surface latérale des pastilles 13, aucun jeu radial ne subsistant entre les pastilles et la surface intérieure de la gaine. De même, les pastilles poreu ses 11 et 12 sont serties par la gaine 10 qui a subi un rétreint à température et pression élevées. On réalise alors, par découpage des extrémités de la gaine tubulaire 10, la séparation des bouchons de fermeture des pastilles poreuses 11 et 12 qui assurent le maintien des pastilles absorbantes 13.

La capsule 5 se trouve sous la forme présentée sur la figure 2.

Le montage de l'élément absorbant à partir des capsules modulaires est effectué comme indiqué précédemment.

Lorsque le crayon absorbant est en service, les pastilles 13 en carbure de bore subissent un bombardement neutronique qui provoque leur gon flement et leur dégradation. L'enveloppe tubulaire 10 de la capsule 5 suit les déformations des pastilles 13, si bien qu'il n'existe aucun jeu radial entre les pastilles et la gaine. On évite ainsi toute accumula tion de poudre ou de particules entre les pastilles 13 et l'enveloppe 10. Les pastilles absorbantes étant d'autre part contenues dans les capsules 5, il ne se produit pas d'interaction entre le matériau absorbant et la gaine externe 2.

En outre, les gaz formés sous irradiation à l'intérieur de la capsule 5 peuvent s'échapper par les extrémités de la capsule constituée par les pastilles poreuses 11 et 12. Il ne se produit donc pas d'élévation de la pression gazeuse à l'intérieur des capsules 5 qui pourrait conduire à des déformations de la paroi de l'enveloppe tubulaire 10.

Les gaz formés sous irradiation et en particulier l'hélium s'échappent des capsules 5 et viennent se rassembler à l'extrémité de l'élément absorbant, entre la capsule 5n et le bouchon 3.

De manière avantageuse, on choisira pour consti tuer l'enveloppe tubulaire 10 des capsules, un matériau assurant le piègeage du tritium formé à partir du bore 10, sous l'effet du bombardement neutronique. Ce matériau peut être par exemple du zirconium ou du titane ou un de leurs alliages. Ces matériaux peuvent être choisis, en particulier parce que la section de capture du matériau de l'enveloppe de la capsule a peu d'importance, puisqu'il s'agit ici de la conception d'un crayon absorbant.

Le matériau constituant la gaine externe pourra être constitué avantageusement par de l'acier inoxydable.

Dans le cas où, en service, il se produit une rupture de la gaine externe 2 de l'élément absorbant, l'eau de refroidissement du réacteur ne vient pas en contact avec le matériau absorbant qui est contenu à l'intérieur des capsules 5 dont les enveloppes 10 sont restées étanches. Il est à remarquer cependant que pour éviter un contact de l'eau avec le matériau absorbant, il est nécessaire de choisir la porosité des pastilles 11 et 12 des capsules 5 de façon que les gaz produits par irradiation et en particulier l'hélium puisse passer à travers ces pastilles poreuses mais que l'eau de refroidissement du réacteur ne puisse les traverser dans l'autre sens.

S'il se produit, pour un même élément absorbant, en service, une rupture de la gaine externe 2 et une rupture d'une enveloppe de l'une des capsules 5, l'eau de refroidissement du réacteur pourra venir en contact du matériau absorbant disposé dans la capsule dont l'enveloppe présente une fissure. Le carbure de bore B₄C contenu dans cette capsule 5 subira alors une dégradation et une dissolution de type chimique, comme il a été indiqué ci-dessus.

Même si la totalité du carbure de bore contenu dans la capsule est dissoute, cette élimination du carbure de bore se limitera à l'une des capsules de l'élément absorbant qui conservera donc en grande partie son antiréactivité. Il sera alors possible d'attendre une période d'entretien et de réparation du réacteur nucléaire, pour effectuer le remplacement du crayon absorbant défectueux.

L'élément absorbant suivant l'invention présente donc une meilleure tenue en service et une plus grande fiabilité que les éléments absorbants suivant l'art antérieur.

Il est bien évident que l'invention ne se limite pas au mode de réalisation qui a été décrit.

C'est ainsi que le matériau absorbant contenu dans les capsules peut se présenter sous la forme d'une poudre plus ou moins compactée dont on remplit l'enveloppe tubulaire 10 qui peut être ensuite scellée avant de subir un marmittage assurant le rétreint de l'enveloppe et son frettage sur la poudre compactée.

L'invention peut s'appliquer à d'autres matériaux absorbants que le carbure de bore B₄C. Les matériaux constituant la gaine externe de l'élément absorbant et les enveloppes tubulaires des capsules modulaires peuvent être différents de ceux qui ont été indiqués ci-dessus.

L'invention peut s'appliquer à tout élément absorbant utilisé dans un réacteur nucléaire refroidi par un liquide tel que de l'eau.

## Revendications

1.- Elément absorbant les neutrons comportant une gaine tubulaire (2) fermée à ses extrémités, en un matériau résistant au fluage et à la corrosion sous l'action d'un réfrigérant à pression et température élevées d'un réacteur nucléaire, renfermant un matériau absorbant les neutrons, caractérisé par le fait qu'il comporte une pluralité de capsules modulaires (5) disposées l'une à la suite de l'autre dans la direction axiale, à l'intérieur de la gaine (2), chacune des capsules modulaires (5) étant constitué par une enveloppe tubulaire (10) fermée à ses deux extrémités par un élément poreux (11, 12) entièrement remplie de matériau absorbant (13).

2.- Elément absorbant suivant la revendication 1, caractérisé par le fait que sa gaine tubulaire externe (2) est en acier inoxydable.

3.- Capsule modulaire pour un élément combustible suivant l'une quelconque des revendications 1 et 2, caractérisée par le fait qu'elle comporte une enveloppe tubulaire (10) renfermant un matériau absorbant les neutrons (13) remplissant entièrement le volume intérieur de l'enveloppe (10) ainsi que des éléments poreux de fermeture (11, 12) à chacune de ses extrémités.

4.- Capsule modulaire suivant la revendication 3, caractérisée par le fait que le matériau absorbant (13) est sous la forme d'un empilement de pastilles (13) inséré sans jeu radial à l'intérieur de l'enveloppe tubulaire (10).

5.- Capsule modulaire suivant la revendication 3, caractérisée par le fait que le matériau absorbant (13) est sous la forme d'une poudre compactée enfermée sans jeu dans l'enveloppe tubulaire (10).

6.- Capsule modulaire suivant l'une quelconque des revendications 3, 4 et 5, caractérisée par le fait que l'enveloppe tubulaire (10) a une épaisseur comprise entre 0,15 et 0,20 mm.

7.- Capsule modulaire suivant l'une quelconque des revendication 3 à 6, caractérisée par le fait que son enveloppe tubulaire (10) est en titane.

8.- Capsule modulaire suivant l'une quelconque des revendications 3 à 6, caractérisée par le fait que son enveloppe tubulaire (10) est en zirconium.

9.- Capsule modulaire suivant l'une quelconque des revendications 3 à 8, caractérisée par le fait que les éléments poreux (11, 12) de fermeture de son enveloppe (10) sont perméables à des gaz tels que l'hélium mais imperméables à l'eau.

10.- Capsule modulaire selon l'une quelconque des revendications 3 à 9, caractérisée par le fait que le matériau absorbant est du carbure de bore B₄C.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 188 583 (COMPAGNIE D'APPLICATIONS ET DE RECHERCHES ATOMIQUES) <br> * Page 3, colonne de gauche, alinéa 3; page 3, colonne de droite, alinéa 3; figures 1,2,4 * | 1-3,5 | G 21 C 7/10 |
| A | EP-A-0 066 264 (HITACHI LTD) <br> * Page 15, ligne 23 - page 16, ligne 9; figure 8 * | 1,10 | |
| A | DE-A-1 489 643 (AB ATOMENERGI) <br> * Page 3, alinéa 2 - page 4, alinéa 2; figures 1,2 * | 1,5 | |
| A | FR-A-2 570 213 (C.E.A.) <br> * Page 7, ligne 33 - page 8, ligne 2; page 8, ligne 21 - page 9, ligne 7; figure 4 * | 1,2,10 | |

DOMAINES TECHNIQUES RECHERCHES (Int. Cl.4)

G 21 C 7
G 21 C 3

Le présent rapport a été établi pour toutes les revendications

| Lieu de la recherche | Date d'achèvement de la recherche | Examinateur |
|---|---|---|
| LA HAYE | 23-09-1988 | JANDL F. |

EPO FORM 1503 03.82 (P0402)